# EUROPÄISCHE PATENTSCHRIFT

(11) **EP 1 210 259 B1**
(45) Veröffentlichungstag und Bekanntmachung des Hinweises auf die Patenterteilung: **05.09.2007**
(21) Anmeldenummer: 00962328.1
(22) Anmeldetag: 17.08.2000
(51) Int. Cl.: B60T 13/58, B60T 8/00

(54) **BREMSANLAGE FÜR FAHRZEUGE, INSBESONDERE NUTZFAHRZEUGE**
BRAKE SYSTEM FOR VEHICLES, ESPECIALLY COMMERCIAL VEHICLES
SYSTEME DE FREINAGE POUR VEHICULES, NOTAMMENT VEHICULES UTILITAIRES

(30) Priorität: 18.08.1999 DE 19939035
(43) Veröffentlichungstag der Anmeldung: 05.06.2002
(73) Patentinhaber: KNORR-BREMSE SYSTEME FÜR NUTZFAHRZEUGE GMBH, 80809 München (DE)
(72) Erfinder: MAYR-FRÖHLICH, Mathias, 82110 Germering (DE); PIZZOLATO, Paolo, 86899 Landsberg/Lech (DE)
(86) Internationale Anmeldenummer: PCT/EP2000/008016
(87) Internationale Veröffentlichungsnummer: WO 2001/012486

(56) Entgegenhaltungen:
- DE-A- 2 516 077
- DE-A- 2 726 640
- DE-A- 2 851 264

## Beschreibung

### Technisches Gebiet

Die vorliegende Erfindung betrifft eine Bremsanlage für Fahrzeuge, insbesondere Nutzfahrzeuge, gemäß dem Oberbegriff des Patentanspruches 1.

### Stand der Technik

Die gattungsgemäße DE 2 726 640 A1 zeigt eine Bremsanlage für Fahrzeuge mit einem Betriebsbremsventil, das über Pneumatikleitungen mit ABS-Ventilen einer Fahrzeugachse verbunden ist. Die ABS-Ventile sind jeweils mit einem zugeordneten pneumatisch/hydraulischen Wandler verbunden, die einen den Wandlern von den ABS-Ventilen pneumatisch eingesteuerten Bremsdruck in einen hydraulischen Bremsdruck für zugeordnete Fahrzeugbremsen umwandeln. In den Wandler sind Sensoren integriert, die physikalische Größen sensieren, die sich beim Einsteuern eines vom Fahrer vorgegebenen Bremsdruckes einstellen. Die Sensoren sprechen dann an und erzeugen ein Warnsignal, wenn bei Belüften _des zugeordneten pneumatisch/hydraulischen Wandlers ein Pneumatikkolben des Wandlers in einer Anschlagstellung ist. Bein Ansprechen mindestens eines Sensors werden die Bremsdrücke der Fahrzeugbremsen auf beiden Seiten der Fahrzeugachse durch Entlüftung der zugeordneten ABS-Ventile begrenzt.

Die Firmenschrift "Anti-Blockier-Systeme" (ABS) für Nutzfahrzeuge, Abschnitt 7, Fa. WABCO, 1992, beschreibt eine kombinierte Druckluft-/Hydraulik-Bremsanlage, bei der den Bremsen der Hinterachse jeweils ein pneumatisch/hydraulischer Vospannzylinder zugeordnet ist, denen jeweils ein ABS-Ventil vorgeschaltet ist. Die Vorspannzylinder werden über ein Fußbremsventil und die zugeordneten ABS-Ventile pneumatisch mit Druck beaufschlagt und geben diesen Bremsdruck hydraulisch an die Hinterachsenbremsen weiter. Die ABS-Ventile werden in Abhängigkeit von dem von Raddrehzahlsensoren gelieferten Signalen angesteuert.

Aus der DE 44 23 086 A1 ist eine schlupfgeregelte hydraulische Bremsanlage bekannt, bei der zentral, d.h. an dem über das Bremspedal betätigten hydraulischen Hauptbremszylinder, ein Wegsensor vorgesehen ist, der den zurückgelegten Bremspedalweg erfaßt. Wenn das Hauptbremszylindervolumen nahezu erschöpft ist, obwohl ein weiterer Bremsdruckaufbau erwünscht wird, signalisiert der Wegsensor, daß ein zusätzliches Druckmittelvolumen benötigt wird.

Aus der DE 38 28 931 A1 ist eine hydraulische Bremsanlage bekannt, bei der ebenfalls am Hauptbremszylinder ein Wegsensor zur Sensierung des Kolbenweges vorgesehen ist, der eine Störungsdetektierung der Bremsanlage ermöglicht.

Aus der DE 39 21 309 A1 ist eine Bremsanlage bekannt, bei der der Fahrer über die Stellung eines Betriebsbremsventils einen Bremsdruck für das Fahrzeug vorgibt, der den Vorderrädern des Fahrzeugs zugeordneten ABS-Ventilen eingesteuert wird. Die ABS-Ventile begrenzen den eingesteuerten Druck so, daß die Fahrzeugräder nicht blockieren und geben den gegebenenfalls begrenzten Druck an die Radbremszylinder der Vorderradbremsen weiter. Der tatsächlich eingesteuerte Druck wird dabei mittels Drucksensoren gemessen und von einer Steuerelektronik verarbeitet.

Aus dem Kraftfahrtechnischen Taschenbuch/Bosch, 22. Aufl., VDI-Verlag, Düsseldorf, 1995, S. 640 ist bekannt, bei LKW Betriebsbremsanlagen mit pneumatischhydraulischer Kraftübertragung zu verwenden, wobei der Fahrer einen pneumatischen Bremsdruck vorgibt, der in einen hydraulischen Bremsdruck zur Betätigung der Fahrzeugbremsen umgewandelt wird.

Tritt im hydraulischen Teil der Bremsanlage ein Leck auf, so führt dies zum teilweisen oder vollständigen Bremsausfall. Sind beispielsweise an der Vorderachse für die rechte und linke Fahrzeugbremse zwei unabhängige Hydraulikkreise vorgesehen und fällt einer von beiden aus, während der andere ordnungsgemäß arbeitet, so ergibt sich bei einem Bremsvorgang ein Giermoment, das insbesondere bei Bremsungen in Kurven zum Schleudern des Fahrzeugs führen kann.

Aufgabe der Erfindung ist es, eine Vorrichtung zu schaffen, die eine Leckerkennung in der Bremshydraulik und eine Stabilisierung eines Fahrzustandes ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

### Beschreibung der Erfindung

Das Grundprinzip der Erfindung besteht darin, bei einer pneumatisch-hydraulischen Bremsanlage mit einem pneumatisch/hydraulischen Wandler, der einen vom Fahrer pneumatisch eingesteuerten Druck in einen hydraulischen Bremsdruck umwandelt, einen Sensor vorzusehen, der eine sich beim Einsteuern des pneumatischen Drucks im Wandler einstellende physikalische Größe sensiert und der bei Sensieren einer vorgegebenen Größe ein Warnsignal erzeugt.

Die zu sensierende physikalische Größe kann beispielsweise ein Druck oder eine Kolbenstellung eines Kolbens des pneumatisch/hydraulischen Wandlers sein, woraus auf ein Leck in der Bremshydraulik geschlossen werden kann. Wird eine derartige Störung erkannt, so können sich beim Betätigen der Bremse ergebende kritische Fahrzustände, bei denen z.B. infolge eines einseitigen Brmesausfalls ein Giermoment auftritt, stabilisiert werden. Dies ist durch teilweises oder vollständiges Entlüften einer Bremse auf der gegenüberliegenden Fahrzeugseite möglich, was z.B. über ein der Bremse zugeordnetes ABS-Ventil erfolgt. Das Fahrzeug bleibt somit auch bei einseitigem Bremsausfall stabil in der Spur.

Nach einer Weiterbildung der Erfindung ist der pneumatisch/hydraulische Wandler ein Vorspannzylinder mit einem pneumatischen und einem hydraulischen Wandlerteil, wobei der Sensor in den pneumatischen Teil des Wandlers integriert sein kann. Der Sensor kann beispielsweise ein elektrischer Schalter sein, der nur dann anspricht, wenn ein Pneumatik-Kolben des Wandlers bei Belüften des Wandlers, d.h. bei Beaufschlagen mit Bremsdruck in eine Anschlag- bzw. Endstellung geht. Eine derartige Stellung wird bei intakter Bremsanlage nicht erreicht, da sich dann ein hydraulischer Bremsdruck aufbaut, der einer weiteren Verschiebung des Kolbens entgegenwirkt und den "Kolbenhub" begrenzt. Somit kann bei Erreichen einer derartigen "kritischen" Kolbenstellung eindeutig auf ein Leck im Hydraulikteil der Bremsanlage geschlossen werden.

Alternativ dazu könnte auch ein Drucksensor vorgesehen sein, der einen hydraulischen Druckausfall nach dem pneumatisch/hydraulischen Wandler sensiert.

Vorzugsweise ist die erfindungsgemäße Anordnung auf beiden Seiten einer Fahrzeugachse, insbesondere der Vorderachse, vorgesehen. Wenn einer der beiden den Vorderrädern zugeordneten Sensoren anspricht und ein Warnsignal erzeugt, so kann dies als Eingangssignal für eine Bremssteuerelektronik verwendet werden, welche z.B. den Bremsdruck am anderen Vorderrad so regelt, daß sich ein stabiler Fahrzustand einstellt und den Bremsdruck an den Hinterrädern so erhöht, daß eine möglichst gute Restbremswirkung verfügbar ist.

### Beschreibung der Zeichnung

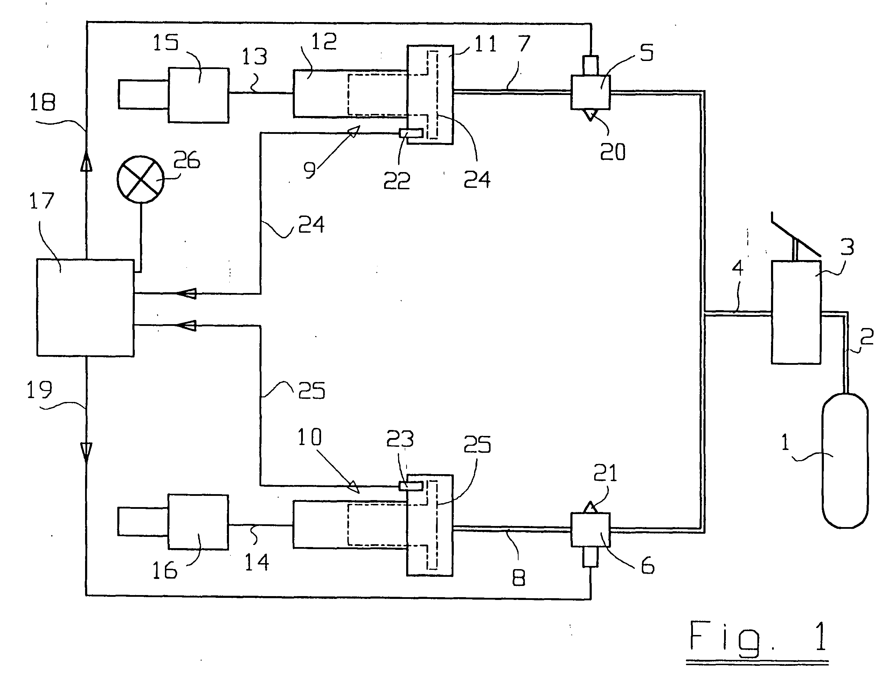

Im folgenden wird die Erfindung im Zusammenhang mit der einzigen Fig. 1 näher erläutert.

Fig. 1 zeigt eine pneumatisch-hydraulische Bremsanlage, die mit einem ABS-System ausgerüstet ist. Ein Vorratsbehälter 1 für Druckluft ist über eine Druckluftleitung 2 mit einem vom Fahrer zu betätigenden Betriebsbremsventil 3 verbunden. Vom Betriebsbremsventil 3 führt eine pneumatische Leitung 4 zu einem ersten ABS-Ventil 5 und zu einem zweiten ABS-Ventil 6. Von den ABS-Ventilen 5 bzw. 6 führt jeweils eine pneumtische Leitung 7 bzw. 8 zu einem Vorspannzylinder 9 bzw. 10, die als pneumatisch/hydraulische Wandler fungieren und die jeweils einen pneumatischen Wandlerteil 11 und einen hydraulischen Wandlerteil 12 aufweisen. Vom hydraulischen Wandlerteil 12 führt jeweils eine hydraulische Leitung 13 bzw. 14 zu einem Bremszylinder 15 bzw. 16, die z.B. den Vorderrädern eines LKW zugeordnet sind. An der Vorderachse sind somit zwei unabhängige "Hydraulikkreise" vorgesehen.

Ferner ist eine Bremssteuerelektronik 17 vorgesehen, welche von Raddrehzahlsensoren (nicht dargestellt) gelieferte Raddrehzahlsignale verarbeitet und den den Vorspannzylindern 9, 10 bzw. den zugeordneten Bremszylindern 15, 16 zugeführten Bremsdruck so regelt, daß ein Blockieren der Räder verhindert wird. Hierzu ist die Bremssteuerelektronik 17 über elektrische Steuerleitungen 18 bzw. 19 mit den ABS-Ventilen 5 bzw. 6 verbunden. Die ABS-Ventile 5 bzw. 6 weisen jeweils eine Entlüftung 20 bzw. 21 auf, über die ein gegebenenfalls zu hoher eingesteuerter Bremsdruck abgeblasen wird.

Die Vorspannzylinder 9 bzw. 10 weisen ferner jeweils einen Sensor 22 bzw. 23 auf, die über zugeordnete elektrische Leitungen 24 bzw. 25 parallel an eine Bremssteuerelektronik 17 angeschlossen sind. Die Sensoren 22 und 23 sind hier in den pneumatischen Wandlerteil 11 integriert und sensieren die Stellung eines im Vorspannzylinder 9 bzw. 10 vorgesehenen Pneumatik-Kolbens 24 bzw. 25. Bei ordnungsgemäßer Funktionsweise der Bremsanlage bewegen sich die Pneumatik-Kolben 24, 25 innerhalb eines konstruktiv vorgegebenen "Normalhubbereiches".

Tritt beispielsweise in der Hydraulikleitung 13 oder im Bremszylinder 15 ein Leck auf, so erfährt der Pneumatik-Kolben 24 bei einer Beaufschlagung mit Druckluft keinen bzw. nur einen verminderten Gegendruck und wird in eine Anschlag- bzw. Endstellung verschoben, die bei ordnungsgemäßer Funktionsweise nicht erreicht wird.

Bei einem Leck fällt somit der Bremszylinder 15 teilweise oder vollständig aus, so daß das Fahrzeug auf der anderen Seite, d.h. durch den Bremszylinder 16 überbremst wird, was ein Giermoment hervorruft und zum Schleudern des Fahrzeugs führen kann. Der Sensor 22 detektiert eine solche "kritische" Stellung des Pneumatik-Kolbens 24 und liefert ein entsprechendes Signal an die Bremssteuerelektronik 17. Hieraus leitet die Bremssteuerelektronik 17 ab, daß einer der Hydraulikkreise oder beide ausgefallen sind und steuert daraufhin das ABS-Ventil 6 so an, daß dieses den über die pneumatische Leitung 4 eingesteuerten Druck ganz oder zumindest teilweise über die Entlüftung 21 abbläst. Hierdurch wird sichergestellt, daß das Fahrzeug auf der Seite des Bremszylinders 16 nicht überbremst wird und stabil in der Spur gehalten werden kann.

Um den Fahrer über den kritischen Fahrzustand zu informieren, kann im Cockpit eine Warnlampe 26 vorgesehen sein, die bei Ansprechen eines der beiden Sensoren 22, 23 aufleuchtet.

Es sei betont, daß bei Ansprechen mindestens eines der beiden Sensoren 22 und 23 vorgesehen sein kann, daß die Bremszylinder 15 und 16 für eine Stabilisierung des Fahrzustandes vollständig entlüftet werden. Alternativ dazu kann auch vorgesehen sein, daß zur Aufrechterhaltung einer gewissen Restbremskraft an der Vorderachse - zusätzlich zur verbleibenden Bremskraft an der Hinterachse - der intakte Vorderachsbremskreis mit einem Bremsdruck beaufschlagt wird, der gegenüber einer "Normalbremsung" verringert ist, was ein "Kompromiß" zwischen maximal möglicher Bremskraft und bestmöglicher Fahrstabilität ist.

### Industrielle Anwendbarkeit

Die vorliegende Erfindung beschreibt eine Bremsanlage mit einer Detektierungseinrichtung zur Leckerkennung in der Bremshydraulik und besitzt daher weitreichende industrielle Anwendungsmöglichkeiten.

## Patentansprüche

1. Bremsanlage für Fahrzeuge, insbesondere Nutzfahrzeuge, mit
einem Betriebsbremsventil (3), das über Pneumatikleitungen (4) mit ABS-Ventilen (5,6) einer Fahrzeugachse verbunden ist,
wobei die ABS-Ventile (5, 6) jeweils mit einem zugeordneten pneumatisch/hydraulischen Wandler (9, 10) verbunden sind, die einen den Wandlern (9, 10) von den ABS-Ventilen (5, 6) pneumatisch eingesteuerten Bremsdruck in einen hydraulischen Bremsdruck für eine zugeordnete Fahrzeugbremse (15, 16) umwandeln, und mit
in die zugeordneten Wandler (9, 10) integrierten Sensoren (22, 23), zum Sensieren physikalischer Größen, die sich beim Einsteuern eines vom Fahrer vorgegebenen Bremsdrucks einstellen,
wobei die Sensoren (22, 23) dann ansprechen und ein Warnsignal erzeugen, wenn bei Belüften des zugeordneten pneumatisch/hydraulischen Wandlers ein Pneumatik-Kolben (24, 25) des Wandlers (9, 10) in einer Anschlagstellung ist und
wobei bei Ansprechen mindestens eines Sensors (22, 23) die Bremsdrücke der Fahrzeugbremsen (15, 16) auf beiden Seiten der Fahrzeugachse durch Entlüftung der zugeordneten ABS-Ventile (5, 6) begrenzt werden,
**dadurch gekennzeichnet,**
**daß** die Sensoren (22, 23) der pneumatisch/hydraulischen Wandler (9, 10) mit einer Bremssteuerelektronik (17) verbunden sind, welche die ABS-Ventile (5, 6) derart steuert, daß bei Ansprechen eines der beiden Sensoren (22, 23) die Bremssteuerelektronik (17) den Bremsdruck, der derjenigen Fahrzeugbremse (15, 16) eingesteuert wird, die dem anderen Sensor (22, 23) zugeordnet ist, auf einen vorgegebenen Höchstdruck begrenzt.

2. Bremsanlage für Fahrzeuge nach Anspruch 1,
**dadurch gekennzeichnet,**
**daß** die pneumatisch/hydraulischen Wandler (9, 10) Vorspannzylinder mit je einem pneumatischen (11) und einem hydraulischen Teil (12) sind und daß die Sensoren (22, 23) in den zugeordneten pneumatischen Teil (11) integriert sind.

3. Bremsanlage für Fahrzeuge, nach einem der Ansprüche 1 oder 2,
**dadurch gekennzeichnet,**
**daß** der Sensor (22, 23) ein elektrischer Schalter ist.

4. Bremsanlage für Fahrzeuge nach einem der Ansprüche 1 bis 3,
**dadurch gekennzeichnet,**
**daß** die pneumatisch/hydraulischen Wandler (9, 10) den Bremsen der Vorderachse zugeordnet sind.

5. Bremsanlage für Fahrzeuge nach einem der Ansprüche 1 bis 4,
**dadurch gekennzeichnet,**
**daß** eine Warnlampe (26) vorgesehen ist, die aufleuchtet, sobald einer der beiden Sensoren (22, 23) anspricht.

## Claims

1. Brake system for vehicles, especially commercial vehicles, comprising
a service brake valve (3) which is connected to a vehicle axle via pneumatic lines (4) with anti-lock braking valves (5, 6),
wherein each of said anti-lock braking valves (5, 6) is connected to an associated pneumatic/hydraulic converter (9, 10), which converters convert a braking pressure pneumatically supplied from said anti-lock braking valves (5, 6) to said converters (9, 10) into a hydraulic braking pressure for an associated vehicle brake (15, 16), and comprising
sensors (22, 23) integrated into said associated converters (9, 10) for sensing physical parameters adjusting when a braking pressure predetermined by the driver is supplied,
with said sensors (22, 23) responding and generating a warning signal when a pneumatic piston (24, 25) of said converter (9, 10) is in a bearing position when the associated pneumatic/hydraulic converter is ventilated, and
wherein, when at least one sensor (22, 23) responds, the braking pressures of the vehicle brakes (15, 16) on both sides of the vehicle axle are limited by ventilation of the associated anti-lock braking valves (5, 6),
**characterised in**
**that** said sensors (22, 23) of said pneumatic/hydraulic converters (9, 10) are connected to an electronic brake control system (17) that controls said anti-lock braking valves (5, 6) in such a manner that upon response of one of said two sensors (22, 23), said electronic brake control system (17) limits the braking pressure supplied to that vehicle brake (15, 16) which is associated with the other sensor (22, 23), to a predetermined maximum level.

2. Brake system for vehicles according to Claim 1,
**characterised in**
**that** said pneumatic/hydraulic converters (9, 10) are biasing cylinders including each a pneumatic section (11) and a hydraulic section (12), and that said sensors (22, 23) are integrated into the associated pneumatic section (11).

3. Brake system for vehicles according to any of the Claims 1 or 2,
**characterised in**
**that** said sensor (22, 23) is an electric switch.

4. Brake system for vehicles according to any of the Claims 1 to 3,
**characterised in**
**that** said pneumatic/hydraulic converters (9, 10) are associated with the brakes of the front axle.

5. Brake system for vehicles according to any of the Claims 1 to 4,
**characterised in**
**that** an indicator lamp (26) is provided which lights up as soon as one of said two sensors (22, 23) responds.

## Revendications

1. Système de freinage pour véhicules, notamment pour véhicules utilitaires, comprenant
un clapet de frein de service (3) relié à un essieu du véhicule via des conduits pneumatiques (4) renfermant des clapets de freinage antiblocage (5, 6),
dans lequel chacun desdits clapets de freinage antiblocage (5, 6) est relié à un convertisseur pneumatique/hydraulique affecté (9, 10), qui convertit une pression de freinage alimentée, sous forme pneumatique à partir desdits clapets de freinage antiblocage (5, 6) auxdits convertisseurs (9, 10) en une pression de freinage hydraulique pour un frein de véhicule affecté (15, 16), et comprenant
des détecteurs (22, 23) intégrés dans lesdits convertisseurs affectés (9, 10) afin de détecter des paramètres physiques, qui s'ajustent, quand une pression de freinage prédéterminée par le conducteur est alimentée,
auxdits détecteurs (22, 23) réagissant et engendrant un signal avertisseur, dès qu'un piston pneumatique (24, 25) dudit convertisseur (9, 10) se trouve en une position d'appui, quand le convertisseur pneumatique/hydraulique affecté est ventilé, et
dans lequel, quand au moins un détecteur (22, 23) réagit, les pressions de freinage des freins du véhicule (15, 16) des deux côtés de l'essieu du véhicule sont limitées par ventilation des clapets de freinage antiblocage (5, 6) affectés,
**caractérisé en ce**
**que** lesdits détecteurs (22, 23) desdits convertisseurs pneumatiques/hydrauliques (9, 10) sont reliés à un système électronique de commande de freinage (17), qui commande lesdits clapets de freinage antiblocage (5, 6) d'une telle manière, que ledit système électronique de commande de freinage (17) limite la pression de freinage alimentée à ce frein de véhicule (15, 16), qui est affecté à l'autre détecteur (22, 23) à un niveau maximum prédéterminé, dès qu'un desdits deux détecteurs (22, 23) réagit.

2. Système de freinage pour véhicules selon la revendication 1,
**caractérisé en ce**
**que** lesdits convertisseurs pneumatiques/hydrauliques (9, 10) sont des cylindres à précontrainte, qui renferment chacun une partie pneumatique (11 et une partie hydraulique (12), et en ce que lesdits détecteurs (22, 23) sont intégrés dans la partie pneumatique affectée (11).

3. Système de freinage pour véhicules selon une quelconque des revendications 1 ou 2,
**caractérisé en ce**
**que** ledit détecteur (22, 23) est un commutateur électrique.

4. Système de freinage pour véhicules selon une quelconque des revendications 1 à 3,
**caractérisé en ce**
lesdits convertisseurs pneumatiques/hydrauliques (9, 10) sont affectés aux freins à l'essieu avant.

5. Système de freinage pour véhicules selon une quelconque des revendications 1 à 4,
**caractérisé en ce**
**qu'**une lampe témoin (26) est prévue, qui s'allume dès qu'un desdits deux détecteurs (22, 23) répond.
